# EUROPEAN PATENT SPECIFICATION

(11) **EP 3 239 396 B1**
(45) Date of publication and mention of the grant of the patent: **13.02.2019**
(21) Application number: 17162491.9
(22) Date of filing: 23.03.2017
(51) Int. Cl.: D21F 7/00, D21F 9/00, D21F 11/04

(54) **A SUPPORT FRAME STRUCTURE FOR A FIBER WEB MACHINE AND A FIBER WEB MACHINE**
STÜTZRAHMENSTRUKTUR FÜR EINE MASCHINE ZUR HERSTELLUNG EINER FASERSTOFFBAHN UND MASCHINE ZUR HERSTELLUNG EINER FASERSTOFFBAHN
STRUCTURE DE SUPPORT D'UNE MACHINE DE PRODUCTION D'UNE BANDE DE MATÉRIAU FIBREUX ET MACHINE DE PRODUCTION D'UNE BANDE DE MATÉRIAU FIBREUX

(30) Priority: 28.04.2016 FI 20165368
(43) Date of publication of application: 01.11.2017
(73) Proprietor: Valmet Technologies, Inc., 02150 Espoo (FI)
(72) Inventor: PELLIKKA, Risto, 41340 Leppävesi (FI); SALOJÄRVI, Jussi, 40520 Jyväskylä (FI); HYTÖNEN, Janne, 41325 Laukkavirta (FI); GINSBURG, Alexander, 02150 Espoo (FI)
(74) Representative: TBK

(56) References cited:
- EP-A1- 2 199 460
- WO-A1-92/04499
- WO-A1-2007/144459
- WO-A1-2012/065644
- US-A- 2 330 891
- US-A- 3 382 143
- US-A- 3 989 587
- US-A- 5 829 159

## Description

The present invention relates to a support frame structure according to the preamble of claim 1 of a fiber web machine and also to a fiber web machine comprising such a support frame structure.

### Background art

Fiber web machines are known as such to have frames into which various components of the machine are attached. Such components are for example various dewatering devices, fabric guide rolls, cleaning devices and air systems. The frame of a fiber web machine comprises a front side line and a back side line where the frame column are located. Also the frame comprises long beams along machine direction which are supported by the columns. The front and back side columns and beams are also supported in cross direction by girders.

In EP 2 233 636 A2 there is shown an example of a frame structure for a paper machine.

Particularly a forming section of the fiber web machine is complicated because the forming fabric is an endless loop which must be changed more or less regularly. When the fabric loop is changed in the machine the front side columns must be opened or cut at appropriate location and the whole forming section must be supported without the columns. As is disclosed in US 3 989 587 A, the column may be provided with detachable portions the removal of which creates cut-outs in the columns.

WO 00/71814 A1 discloses an example of a cantilever beam where horizontal beams extending in the cross-machine direction and connecting the side frames on the front (tending) side and the back (driving) side are cantilever beams, which project on the driving side from vertical beams of the side frame of the driving side of the machine and are supported by means of a support member on the floor structures of the machine hall at a distance from the back side line of the machine.

Typically the frames for a new fiber web machine are designed separately for each project, although there may be some basic constructions proved to be advantageous in practise, which are desired to be adopted as far as possible. In any case the prior art frame structure require considerable amount of designing work to adapt the requirements of a specific project.

WO 92/04499 A1 shows a support frame structure for a fiber web machine according to the preamble of claim 1.

Moreover, US 3 382 143 A shows a fiber web machine comprising at least one support frame structure.

### Summary of the invention

It is the object of the present invention to further develop a support frame structure according to the preamble of claim 1 for a fiber web machine such that a simple and standardized structure for creating support frames in a fiber web machine can be provided.

The object of the present invention is achieved by a support frame structure having the features of claim 1 for a fiber web machine.

Further advantageous developments of the present invention are defined in the dependent claims. In particular, a fiber web machine comprising at least one support frame structure according to the present invention is claimed in claim 4.

It is an advantage of the present invention to provide a support frame structure by means of which the feasibility of the frame system of a fiber web machine is considerably improved in many ways compared to the prior art solutions.

The second columns, i.e. so called drive side columns when installed to a fiber web machine, need not to be constructed of more than one part, and advantageously the second column at it length corresponding to the length of the first column comprising at least two parts and the fabric insertion means, is made of one single part.

Preferably, each one of the columns is provided with one second type of attachment interfaces arranged to a third side of the column compatible with the attachment interfaces in the girders.

Preferably, a fiber web machine comprises at least one support frame structure, according to the invention as mentioned above, wherein each one of the columns is provided with one of the first type of attachment interfaces at its face outside the ends of the support frame structure in direction of the first and the second lines, and wherein the at least one support frame structure is attached with other frame structures of the fiber web machine via the first type of attachment interfaces.

Preferably, the fiber web machine comprises at least two support frame structures on the same horizontal level and wherein the support frame structures joins with other frame structures of the fiber web machine and/or with each other via the first type of attachment interfaces.

Preferably, the fiber web machine comprises at least two support frame structures on top of each other and wherein the columns in the support frame structures are on top of each other and the beams and the girders are arranged horizontally between the columns.

Preferably, the attachment interfaces in the columns are arranged on the same horizontal plane. The horizontal plane is advantageously the general running plane of a forming fabric in the fiber web machine.

The invention is particularly suitable for use in a forming section or in a press section of a fiber web machine where the fabrics used are of endless loop type.

In this connection the term "column" means a support pillar assembled or intended to be assembled vertically or substantially vertically in the frame structure and the term "beam" means a support bar assembled or intended to be assembled horizontally or substantially horizontally in the machine direction in the frame structure, the term "girder" means a support bar assembled or intended to be assembled horizontally or substantially horizontally in the cross machine direction in the frame structure, unless otherwise specifically stated.

The exemplary embodiments of the invention presented in this patent application are not to be interpreted to pose limitations to the applicability of the appended claims. Generally the invention is best applicable to the forming section and press section of the fiber web machine. The verb "to comprise" is used in this patent application as an open limitation that does not exclude the existence of also unrecited features.

The novel features which are considered as characteristic of the invention are set forth in particular in the appended claims.

### Brief Description of Drawings

In the following, the invention will be described with reference to the accompanying exemplary, schematic drawings, in which
Figure 1 illustrates a support frame structure according to an embodiment of the invention,
Figure 2 illustrates a more detailed presentation of the support frame structure according to an embodiment of the invention,
Figure 3 illustrates a detail of the support frame structure,
Figure 4 illustrates a support frame structure according to another embodiment which does not fall within the scope of the appended claims,
Figure 5 illustrates a support frame structure according to another embodiment of the invention,
Figure 6 illustrates a support frame structure according to another embodiment of the invention, and
Figure 7 illustrates a forming section of the fiber web machine utilizing the support frame structure according to an embodiment of the invention.

### Detailed Description of Drawings

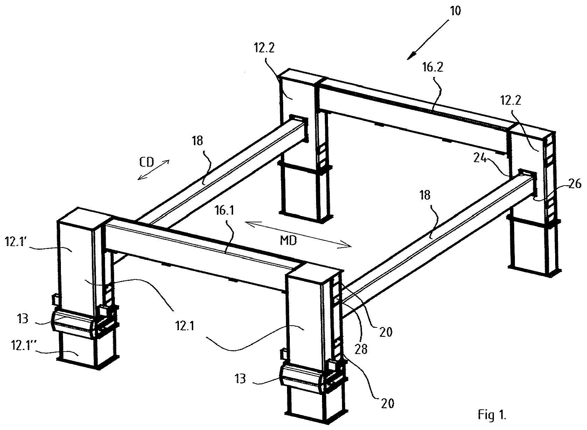

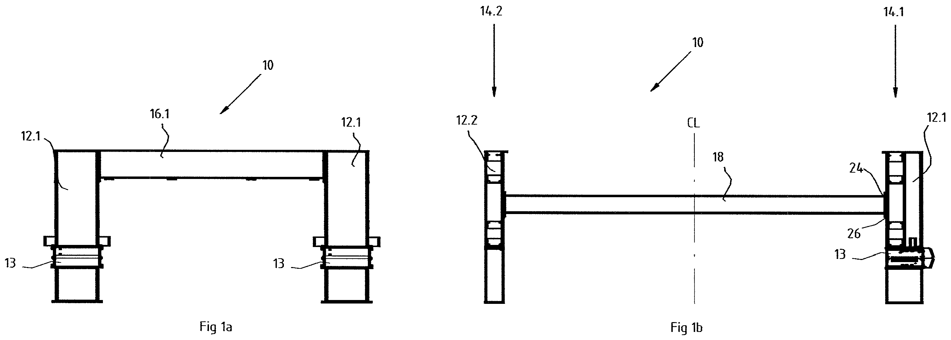

Figure 1 depicts schematically a support frame structure 10 for a fiber web machine. The support frame structure forms bases of a frame system to which the components of the fiber web machine, such as rolls, dewatering devices, water collecting devices, air systems etc. are attached and which supports the components. Figure 1a shows a side view of the main components of the support frame structure 10. Figure 1b show face view of the support frame structure 10 of the figure 1 in machine direction. The support frame structure 10 comprises here two first columns 12.1 on a first line 14.1. The support frame structure 10 comprises also two second columns 12.2 on a second line 14.2. Here the first line 14.1 represents the front (tending) side of the machine and the second line 14.2 represents the back (drive) side of the machine. There is a beam 16.1 arranged to the support frame structure 10 by means of which the successive two columns 12.1 and 12.2 are connected with each other. The support frame structure 10 is also provided with a girder 18 between two adjacent columns 12.1, 12.2 extending in the cross machine direction i.e. from the first line 14.1 to the second line 14.2. By means of the invention the frame structure 10 and particularly the cross directional girder 18 extends between the inner surfaces of the adjacent columns 12.1, 12.2. As can be seen the beams 16.1 and the girder 18 are attached to the vertical sides walls of the columns 12.1, 12.2. The column 12.1,12.2 is an elongated part having a rectangular cross section. There a four planar sides in the column.

As can be seen in the figure 1 the columns are of different thickness at different cross machine sides of the support frame structure. The columns 12.1 in the front side of the frame structure are provided with fabric insertion means 13 in the columns. In other words the first columns 12.1 are constructed of at least two parts 12.1', 12.1" arranged one on top of the other and provided with the fabric insertion means 13 between the section parts. The feature of fabric insertion means 13 in the front side column is shown in each one of the figures.

This way the columns 12.1 are openable for guiding an endless loop of a fabric into the fiber web machine via a gap provided between the parts of the column 12.1. This also facilitates, as merely an optional feature, a use of fabric insertion unit according to EP 1 866 479 A or alike. The fabric insertion means can support tending side columns during the fabric change. Thus the fabric insertion means may include a special fabric insertion device or simply be a removable block part between the colums.

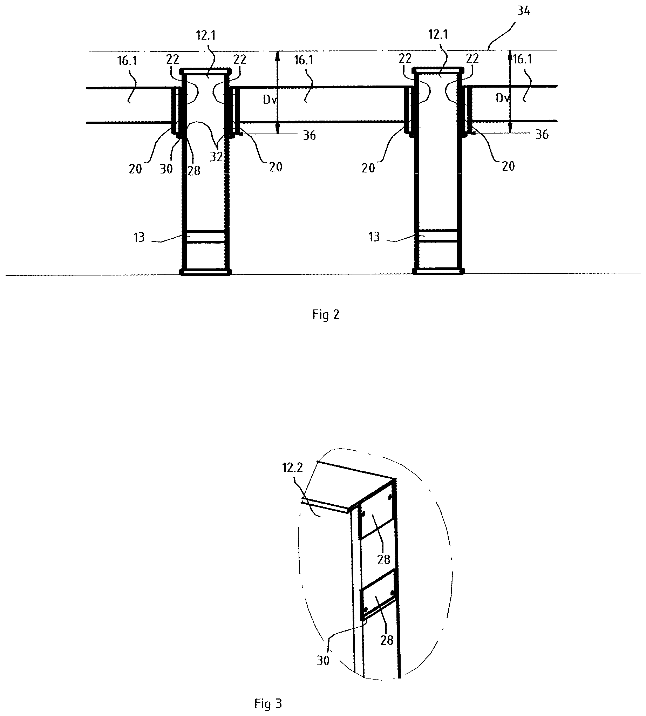

Now referring to the figures 1 and 2 one can see that each one of the columns 12.1 are provided with attachment interfaces 20 by means of which the beams 16.1 are attached to the columns 12.1. The attachment interfaces 20 are arranged at equal longitudinal position of the column. Respectively the ends of the beams 16.1 are provided with attachment interfaces 22 at the ends thereof. The attachment interfaces 20 for the beams are arranged at opposite sides of the column 12.1, 12.2 exposed in the machine direction. The attachment interfaces 22 of the beams 16.1 are compatible with the attachment interfaces 20 in the side walls of the columns 12.1. This way successive columns 12.1 are connected with each other by the beams. Respectively each column 12.1 is provided with an attachment interface 26 for the girder 18, The girder 18 in turn is provided with an attachment interface 24 compatible with the attachment interface 26 in the column 12.1. As an exemplary modification of the invention the figure 1 shows that there may also be to separate attachment interfaces 20 at two different longitudinal position in the column 12.1.

By the compatibility of the attachment interfaces is meant that the actual fastening means used to fix the attachment surfaces with each other are functional with each other for the purpose and provide attachment system mating with each other. In the figure 2 there is shown an advantageous embodiment of the attachment interfaces. In the column 12.1 there is a plain vertical attachment surface 28 in the vertical side of the column 12.1. The surface may be arranged to the column by attaching a plate to the wall of the column e.g. by welding. The plate is provided with an extension or a shoulder 30 at the lower end on which the end of the beam 16.1 may be positioned for attachment. The attachment of the beam 16.1 to the column 12.1 is done by screw joints 32. It should be understood that by the attachment interface 20 it is meant an aggregate of items belonging to one attachment surface. In the figure 3 there is shown an upper corner section of the column 12.2 where the plain vertical attachment surface 28 consist of two separate surfaces one above the other. There is an array of threaded holes provided in both of the attachment surface 28 and a shoulder 30 at the lower end of the lower part. So in this case the attachment interface comprises the attachment surfaces with the threaded holes and the shoulder at the lower end of the lower part.

It should be noted that in the figure 2 the attachment surface consist of only one attachment surface and it should be noted that the actual practical solution of the attachment surface may vary depending on the case and different attachment methods may be applied which are apparent to a skilled person in the art of fiber web machines.

More precisely, the columns 12.1, 12.2 are provided with two similar first type of attachment interfaces 20 which are arranged to opposite first and second sides of the column, an example of which is shown e.g. in the figure 3. In other words the interfaces are in front of and behind the column seen in the machine direction i.e. in the direction of the first line 14.1, or the interfaces are on left side and right side seen from the tending side of the frame structure. The attachment interfaces 22 at the ends of the beams 16.1,16.2 are compatible with the first type of attachment interfaces in the columns 12.1, 12.2. Thus the support frame structure makes it possible to construct a frame structure for a fiber web machine in which the successive columns are attached with each other by one beam 16.1. So, the beam 16,1.16.2 is attached at its one end to a first column ant at its other end to a second column as is depicted in the figure 2. Each column is also provided with at least one second type of attachment interfaces 26, which are arranged to a third side of the column 12.1, 12.2 provided for attachment of the girders 18. The third side of the column faces the center line CL of the frame structure, as is depicted in the figure 2. The first and the second type of attachment interfaces may be similar or different, depending on the case.

Figure 2 also shows the one basic concept of the invention. In the figure 2 there is shown a horizontal plane 34 used as a reference plane. The reference plane may be selected freely but in a fiber web machine an intended general running plane of a forming fabric may be used as it is an illustrative and practical choice. Now, a reference point 36 is defined for each attachment interface 20 in the two columns shown in the figure. Even if the attachment interface may be substantially wide and consist of different, separate attachment means, the reference point 36 means one distinct and fixed location of the attachment interface. Now, as is depicted in the figure 3 the reference points 36 of the attachment interfaces 20 - and thus also the attachment interfaces 20 - are positioned at equal vertical distance Dv from the horizontal plane 34. This applies to the adjacent columns in the first line of columns 14.1 and in the second line of columns 14.2. This way when a fiber web machine is constructed making use of the columns, beams and girders according to the invention the compatibility of the parts, as well as interchangeability of the respective part results is very versatile.

Also in the embodiment of figure 2 the first columns 12.1 are constructed of at least two parts arranged one on top of the other and the fabric insertion means 13 between the section parts. This way the columns 12.1 are openable for guiding an endless loop of a fabric into the fiber web machine via a gap provided between the parts of the column 12.1.

It should be noted that the cross machine girders extend between the columns, the girder starts from a vertical wall of a column and ends at a vertical wall, and the implementation of the present invention avoids using the so called cantilever beams commonly known in the fiber web machines.

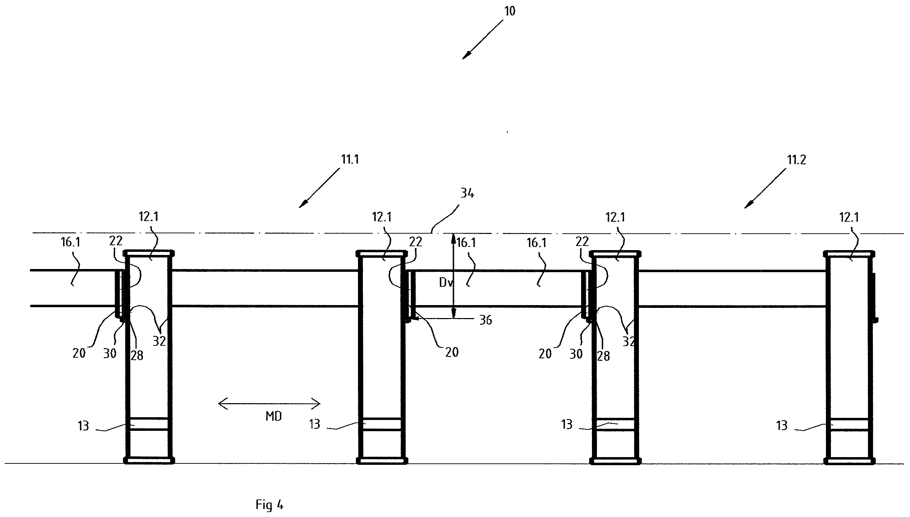

Now according to an embodiment of the invention a forming section of fiber web machine is formed by making use of at least one support frame structure in the frame system of the machine. In the figure 4 there is depicted an embodiment which does not fall within the scope of the appended claims.

In this embodiment the support frame structure comprises at least two of first columns arranged in a first line i.e. the front side line, and at least two of second columns arranged in a second line i.e. the back side line. In other words the support frame structure include two pairs of columns, wherein the pair consist of one column in the back side and one column in the front side. Additionally in the support frame structure the successive two columns in the first line are connected with each other with a first beam between the columns and the successive two columns in the second line are connected with each other with a second beam between the columns. In this embodiment the columns and the beams are fixed with each other by welding joint at certain attachment interfaces forming a frame unit. In the frame unit formed in this manner each one of the columns are provided with attachment interfaces at their faces outside the ends of the support frame structure in direction of the first and the second lines, and the at least one support frame structure is attached with other frame structures of the fiber web machine via the attachment interfaces in the first column and the second column. This way the frame unit comprises more than one columns and it may be preassembled at a preassembly site, whereas several frame units are assembled with each other or with other frame structures at the final production site of the fiber web machine making use of the attachment interfaces at the faces outside the ends of the frame unit in direction of the first and the second lines i.e. the machine direction (MD).

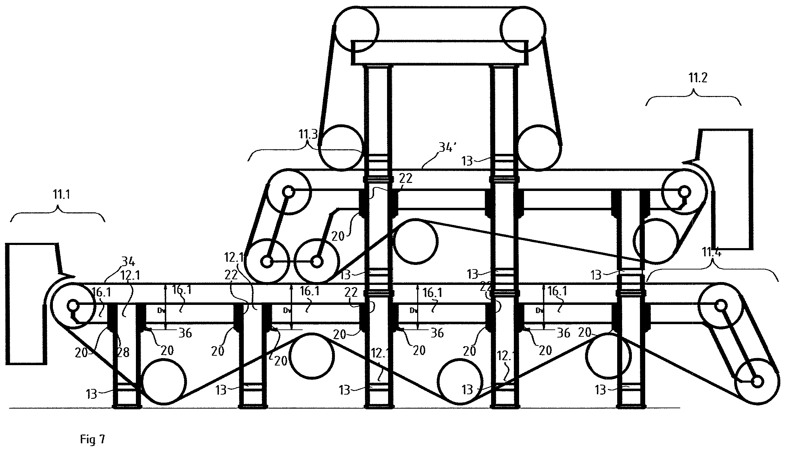

In the scope of the figure 4 one should understand that various different kinds of frame units 11 may be used and connected to the other structures of the fiber web machine making use of standardized attachment interfaces. Such frame units may be preassemble units which are simply attached to the frame system of a fiber web machine making use of the attachment surfaces 20, 28 in the columns and the beams. According to this principle the invention relates to a method of manufacturing a forming section of a fiber web machine, in which method a first unit of the forming section 11.1 is manufactured such that the first unit of the forming section comprises frame construction wherein the frame construction is provided with attachment interfaces 20 at its front side frame end and back side frame end at a same horizontal plane, or at a constant vertical distance Dv from such a plane 34. Additionally a second unit of the forming section 11.2 is manufactured such that the second unit of the forming section comprises frame construction wherein the frame construction is provided with attachment interfaces 20 at its front side frame end and back side frame end at a same horizontal plane; and the first unit of the forming section is attached to the second unit of the forming section at the production site by coupling the attachment interfaces with each other. In the figure 4 there are beams 16.1,16.2 between the first unit of the forming section 11.1 and the second unit of the forming section 11.2 but it is conceivable that the first unit of the forming section 11.1 is coupled directly to the second unit of the forming section 11.2. In the figure 7 there is shown an example of this aspect of the invention where a forming section of a fiber web machine is shown. Here the first unit of the forming section 11.1 is a first head box module. The beams 16.1 of the head box module are provided with the attachment interfaces 20 compatible with the attachment interfaces 28 in the columns 12.1. Additionally the fiber web machine 100 is provided a second head box module 11.2 as the second unit of the forming section and a first web transfer unit 11.3, and a second web transfer unit 11.4. All the independent units are provided with attachment interfaces 20 at their front side frame end and back side frame end arranged at a same constant distance from a horizontal plane 34, 34'. Each one of the units is attached to the fiber web machine making use of the attachment interfaces.

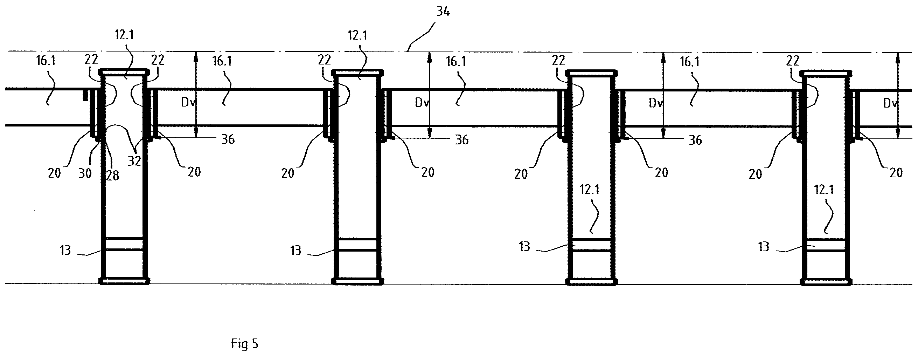

In the figure 5 there is depicted another embodiment of the invention. In this embodiment the support frame structure corresponds to that shown in figure 1 and the fiber web machine comprises several such support frame structures 10 on the same horizontal level. The frame system is formed so that the support frame structures joins with other frame structures of the fiber web machine an/or with each other via the attachment interfaces in the first column 12.1 and in the second column 12.2.

In this embodiment the frame unit the frame units are with each other machine making use of the attachment interfaces at the faces in the columns, the beams and the girders as explained in connection with figures 1 and 2.

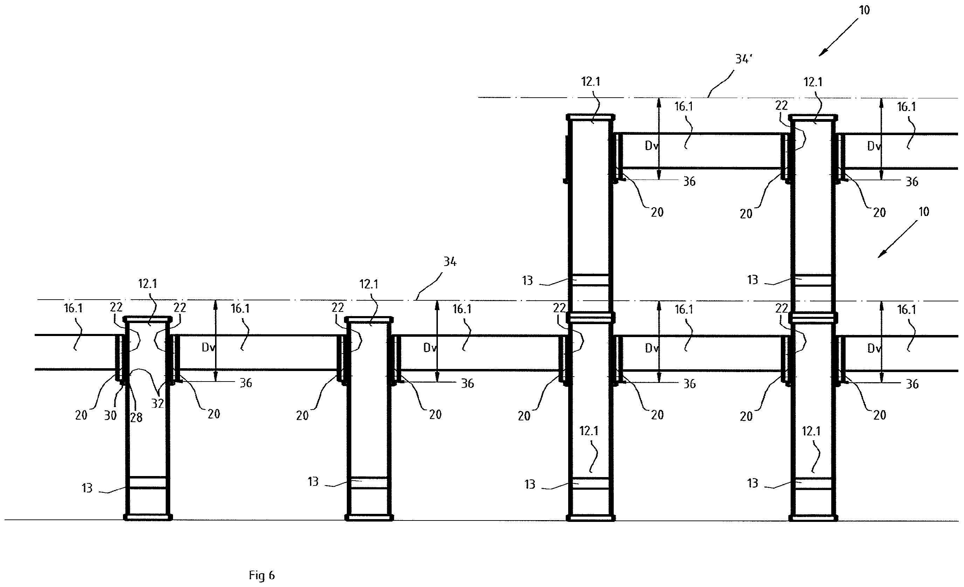

In the figure 6 there is shown another embodiment of the invention, where the support frame structure corresponds to that shown in figure 1 and the fiber web machine comprises several such support frame structures 10 on the same horizontal level. The frame system is formed so that the support frame structures joins with other frame structures of the fiber web machine an/or with each other via the attachment interfaces in the first column 12.1 and in the second column 12.2. Additionally the fiber web machine comprises at least two support frame structures 10 on top of each other. In this case the support frame systems 10 in one horizontal plane 36 joins with other frame structures of the fiber web machine and/or with each other via the attachment interfaces in the first column and the second column.

In the figure 6 there is also shown another advantageous feature relating to the invention. Namely, when two frame structures 10 according to the invention are arranged on top of each other, the columns 12.1,12.2 of the upper frame structure are positioned directly against the columns 12.1,12.2 of the lower support frame structure 10. This way the support forces from the upper frame structure are transmitted via the columns of the upper frame structure to the columns of the lower frame structure, and not directly via any horizontal beam or girder. This facilitates building various configurations of particularly forming section of a fiber web machine in a straight forward manner. The columns in the upper frame structure and in the lower frame structure are advantageously provided with identical attachment interfaces 20, and fabric insertion means 13.

Advantageously the attachment interfaces 20 between the parts are standardized so that interchangeability of the part is accomplished as far as possible. Thus in practice there may be horizontal beams of different length in the same fiber web machine but still the attachment interfaces are similar throughout the machine. It is also advantageous that the columns used in a same horizontal plane are identical and if required the lengths of the horizontal beams 12.1,12.2 may be changed of the desired layout so requires.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the appended claims.

## Claims

1. A support frame structure (10) for a fiber web machine comprising
at least two first columns (12.1) arranged in a first line (14.1), and
at least two second columns (12.2) arranged in a second line (14.2),
wherein the first and the second lines (14.1, 14.2) are arranged parallel to and at a distance from each other, and
wherein the successive two columns (12.1) in the first line (14.1) are connected with each other with a first beam (16.1) and the successive two columns (12.2) in the second line (14.2) are connected with each other with a second beam (16.2), and
wherein the first columns (12.1) are constructed of at least two parts (12.1', 12.2") and provided with a fabric insertion means (13) there between, and
wherein each one of the columns (12.1, 12.2) is provided with an attachment interface (20) for the first or second beam (16.1, 16.2), and wherein the ends of the beams (16.1, 16.2) are provided with attachment interfaces (22) compatible with the attachment interfaces (20) in the columns (12.1, 12.2), and
wherein adjacent first and second columns (12.1, 12.2) are connected with each other with first and second girders (18), respectively, and
wherein each one of the columns (12.1, 12.2) is provided with an attachment interface (26) for the first or second girder (18), and wherein the ends of the girders (18) are provided with attachment interfaces (24) compatible with the attachment interfaces (26) of the columns (12.1, 12.2),
**characterized in that**
each column (12.1, 12.2) is an elongated part having a rectangular cross section and four planar sides in the longitudinal direction thereof, and
each one of the columns (12.1, 12.2) is provided with two similar first type of attachment interfaces (20) arranged to opposite sides of the column (12.1, 12.2) at equal longitudinal position of the column (12.1, 12.2) compatible with the attachment interfaces (22) in the beams (16.1, 16.2).

2. A support frame structure (10) according to claim 1, wherein each one of the columns (12.1, 12.2) is provided with one second type of attachment interfaces (26) arranged to a third side of the column (12.1, 12.2) compatible with the attachment interfaces (24) in the girders (18).

3. A fiber web machine comprising at least one support frame structure (10) according to claim 1 or 2, wherein
each one of the columns (12.1, 12.2) is provided with one of said first type of attachment interfaces at its face outside the ends of the support frame structure (10) in direction of the first and the second lines (14.1 and 14.2), and
wherein the at least one support frame structure (10) is attached with other frame structures of the fiber web machine via said one of said first type of attachment interfaces (20).

4. Fiber web machine according to claim 3, wherein the fiber web machine comprises at least two support frame structures (10) on the same horizontal level (34) and wherein the support frame structures (10) join with other frame structures of the fiber web machine and/or with each other via said first type of attachment interfaces (20).

5. Fiber web machine according to claim 3, wherein the fiber web machine comprises at least two support frame structures (10) on top of each other and wherein the columns (12.1, 12.2) in the support frame structures (10) are on top of each other and the beams (16.1, 16.2) and the girders (18) are arranged horizontally between the columns (12.1, 12.2).

6. Fiber web machine according to claim 3 or 4, wherein the attachment interfaces in the columns (12.1, 12.2) are arranged on the same horizontal plane.

## Patentansprüche

1. Stützrahmenstruktur (10) für eine Faserbahnmaschine, die Folgendes aufweist:
zumindest zwei erste Säulen (12.1), die in einer ersten Linie (14.1) angeordnet sind, und
zumindest zwei zweite Säulen (12.2), die in einer zweiten Linie (14.2) angeordnet sind,
wobei die erste Linie und die zweite Linie (14.1, 14.2) parallel und in einem Abstand zueinander angeordnet sind, und
wobei die aufeinanderfolgenden zwei Säulen (12.1) in der ersten Linie (14.1) miteinander durch einen ersten Balken (16.1) verbunden sind und die aufeinanderfolgenden zwei Säulen (12.2) in der zweiten Linie (14.2) miteinander durch einen zweiten Balken (16.2) verbunden sind, und
wobei die ersten Säulen (12.1) aus zumindest zwei Teilen (12.1', 12.2") konstruiert sind und mit einer Gewebeeinführungseinrichtung (13) dazwischen vorgesehen sind, und
wobei jede der Säulen (12.1, 12.2) mit einer Anbringungsschnittstelle (20) für den ersten oder zweiten Balken (16.1, 16.2) vorgesehen ist, und wobei die Enden der Balken (16.1, 16.2) mit Anbringungsschnittstellen (22) vorgesehen sind, die mit den Anbringungsschnittstellen (20) in den Säulen (12.1, 12.2) kompatibel sind, und
wobei benachbarte erste und zweite Säulen (12.1, 12.2) miteinander durch erste und zweite Träger (18) entsprechend verbunden sind, und
wobei jede der Säulen (12.1, 12.2) mit einer Anbringungsschnittstelle (26) für den ersten oder zweiten Träger (18) vorgesehen ist, und wobei die Enden der Träger (18) mit Anbringungsschnittstellen (24) vorgesehen sind, die mit den Anbringungsschnittstellen (26) der Säulen (12.1, 12.2) kompatibel sind,
**dadurch gekennzeichnet, dass**
jede Säule (12.1, 12.2) ein langgestreckter Teil ist, der einen viereckigen Querschnitt und vier ebene Seiten in dessen Längsrichtung hat, und
jede der Säulen (12.1, 12.2) mit zwei gleichartigen Anbringungsschnittstellen (20) einer ersten Bauart vorgesehen ist, die an entgegengesetzten Seiten der Säule (12.1, 12.2) an einer gleichen Längsposition der Säule (12.1, 12.2) kompatibel zu den Schnittstellen (22) in den Balken (16.1, 16.2) angeordnet sind.

2. Stützrahmenstruktur (10) nach Anspruch 1, wobei jede der Säulen (12.1, 12.2) mit einer zweiten Bauart von Anbringungsschnittstellen (26) vorgesehen ist, die an einer dritten Seite der Säule (12.1, 12.2) kompatibel zu den Anbringungsschnittstellen (24) in den Trägern (18) angeordnet sind.

3. Faserbahnmaschine, die zumindest eine Stützrahmenstruktur (10) nach Anspruch 1 oder 2 aufweist,
wobei jede der Säulen (12.1, 12.2) mit einer der ersten Bauart von Anbringungsschnittstellen an ihrer Fläche außerhalb der Enden der Stützrahmenstruktur (10) in Richtung der ersten Linie und der zweiten Linie (14.1 und 14.2) vorgesehen ist, und
wobei die zumindest eine Stützrahmenstruktur (10) an anderen Rahmenstrukturen der Faserbahnmaschine über die eine der ersten Bauart von Anbringungsschnittstellen (20) angebracht ist.

4. Faserbahnmaschine nach Anspruch 3, wobei die Faserbahnmaschine zumindest zwei Stützrahmenstrukturen (10) auf demselben waagerechten Niveau (34) aufweist, und wobei die Stützrahmenstrukturen (10) mit anderen Rahmenstrukturen der Faserbahnmaschine und/oder miteinander über die erste Bauart von Anbringungsschnittstellen (20) verbunden sind.

5. Faserbahnmaschine nach Anspruch 3, wobei die Faserbahnmaschine zumindest zwei Stützrahmenstrukturen (10) übereinander aufweist, und wobei die Säulen (12.1, 12.2) in den Stützrahmenstrukturen (10) übereinander liegen und die Balken (16.1, 16.2) und die Träger (18) waagerecht zwischen den Säulen (12.1, 12.2) angeordnet sind.

6. Faserbahnmaschine nach Anspruch 3 oder 4, wobei die Anbringungsschnittstellen in den Säulen (12.1, 12.2) in derselben waagerechten Ebene angeordnet sind.

## Revendications

1. Structure de support (10) d'une machine de production d'une bande de matériau fibreux comprenant
au moins deux premières colonnes (12.1) agencées en une première ligne (14.1), et au moins deux secondes colonnes (12.2) agencées en une seconde ligne (14.2),
dans laquelle la première et la seconde ligne (14.1, 14.2) sont agencées parallèlement l'une à l'autre et à une certaine distance l'une de l'autre, et
dans laquelle les deux colonnes successives (12.1) dans la première ligne (14.1) sont reliées l'une à l'autre par une première poutre (16.1) et les deux colonnes successives (12.2) dans la seconde ligne (14.2) sont reliées l'une à l'autre par une seconde poutre (16.2), et
dans laquelle les premières colonnes (12.1) sont construites à partir d'au moins deux parties (12.1', 12.2") et dotées d'un moyen d'insertion de tissu (13) entre celles-ci, et dans laquelle chacune des colonnes (12.1, 12.2) est dotée d'une interface d'attache (20) pour la première ou la seconde poutre (16.1, 16.2), et dans laquelle les extrémités des poutres (16.1, 16.2) sont dotées d'interfaces d'attache (22) compatibles avec les interfaces d'attache (20) dans les colonnes (12.1, 12.2), et
dans laquelle des premières et secondes colonnes (12.1, 12.2) adjacentes sont reliées l'une à l'autre par des première et seconde poutrelles (18), respectivement, et
dans laquelle chacune des colonnes (12.1, 12.2) est dotée d'une interface d'attache (26) pour la première ou seconde poutrelle (18), et dans laquelle les extrémités des poutrelles (18) sont dotées d'interfaces d'attache (24) compatibles avec les interfaces d'attache (26) des colonnes (12.1, 12.2),
**caractérisée en ce que**
chaque colonne (12.1, 12.2) est une partie allongée ayant une section transversale rectangulaire et quatre côtés planaires dans la direction longitudinale de celle-ci, et chacune des colonnes (12.1, 12.2) est dotée de deux interfaces d'attache (20) similaires de premier type agencées à des côtés opposés de la colonne (12.1, 12.2) à une position longitudinale égale de la colonne (12.1, 12.2) compatibles avec les interfaces d'attache (22) dans les poutres (16.1, 16.2).

2. Structure de support (10) selon la revendication 1, dans laquelle chacune des colonnes (12.1, 12.2) est dotée d'interfaces d'attache (26) de second type agencées sur un troisième côté de la colonne (12.1, 12.2) compatibles avec les interfaces d'attache (24) dans les poutrelles (18).

3. Machine de production d'une bande de matériau fibreux comprenant au moins une structure de support (10) selon la revendication 1 ou 2,
dans laquelle
chacune des colonnes (12.1, 12.2) est dotée de l'une desdites interfaces d'attache de premier type au niveau de sa face à l'extérieur des extrémités de la structure de support (10) dans la direction de la première et de la seconde ligne (14.1 et 14.2), et dans laquelle l'au moins une structure de support (10) est attachée à d'autres structures de la machine de production d'une bande de matériau fibreux par l'intermédiaire de ladite une desdites interfaces d'attache (20) de premier type.

4. Machine de production d'une bande de matériau fibreux selon la revendication 3, dans laquelle la machine de production d'une bande de matériau fibreux comprend au moins deux structures de support (10) sur le même niveau horizontal (34) et dans laquelle les structures de support (10) sont jointes à d'autres structures de la machine de production d'une bande de matériau fibreux et/ou les unes aux autres par l'intermédiaire desdites interfaces d'attache (20) de premier type.

5. Machine de production d'une bande de matériau fibreux selon la revendication 3, dans laquelle la machine de production d'une bande de matériau fibreux comprend au moins deux structures de support (10) les unes sur les autres et dans laquelle les colonnes (12.1, 12.2) dans les structures de support (10) sont les unes sur les autres et les poutres (16.1, 16.2) et les poutrelles (18) sont agencées horizontalement entre les colonnes (12.1, 12.2).

6. Machine de production d'une bande de matériau fibreux selon la revendication 3 ou 4, dans laquelle les interfaces d'attache dans les colonnes (12.1, 12.2) sont agencées sur le même plan horizontal.
